# FASCICULE DE BREVET EUROPEEN

(11) **EP 0 842 465 B1**
(45) Date de publication et mention de la délivrance du brevet: **23.10.2002**
(21) Numéro de dépôt: 96927110.5
(22) Date de dépôt: 30.07.1996
(51) Int. Cl.: G06F 9/38

(54) **SYSTEME D'ORGANISATION ET PROCEDE DE SEQUENCEMENT DES CIRCUITS D'UN MICROPROCESSEUR**
ORGANISATIONSSYSTEM UND VERFAHREN ZUR REIHENFOLGEBESTIMMUNG DER SCHALTUNGEN EINES MIKROPROZESSORS
MICROPROCESSOR CIRCUIT ORGANISATION SYSTEM AND SEQUENCING METHOD

(30) Priorité: 31.07.1995 FR 9509316
(43) Date de publication de la demande: 20.05.1998
(73) Titulaire: CSEM Centre Suisse d'Electronique et de Microtechnique S.A., 2007 Neuchâtel (CH)
(72) Inventeur: MASGONTY, Jean-Marc, CH-2035 Corcelles (CH); ARM, Claude, CH-2055 Saint Martin (CH); PIGUET, Christian, CH-2000 Neuchâtel (CH)
(74) Mandataire: Ballot, Paul
(86) Numéro de dépôt international: FR9601203
(87) Numéro de publication internationale: WO97005545

(56) Documents cités:
- EP-A- 0 569 312
- EP-A- 0 638 858
- US-A- 4 658 355
- IBM TECHNICAL DISCLOSURE BULLETIN, vol. 36, no. 7, 1 Juillet 1993, pages 405-406, XP000383678 "REDUCING THE POWER DISSIPATION OF PROCESSORS ON LARGE CMOS CHIPS"
- IEEE TRANSACTIONS ON CIRCUITS AND SYSTEMS, vol. 38, no. 1, 1 Janvier 1991, pages 100-108, XP000207543 ERNST R: "LONG PIPELINES IN SINGLE-CHIP DIGITAL SIGNAL PROCESSORS-CONCEPTS AND CASE STUDY"
- IBM TECHNICAL DISCLOSURE BULLETIN, vol. 28, no. 8, Janvier 1986, NEW YORK US, pages 3260-3265, XP002001756 "Processor Control Using Cycle Types"

## Description

L'invention concerne les microprocesseurs et plus particulièrement, dans de tels microprocesseurs, un système d'organisation des circuits électroniques et un procédé pour séquencer les opérations effectuées par ces circuits de manière à augmenter l'efficacité des microprocesseurs du point de vue de leur vitesse et de la réduction de leur consommation électrique.

Dans un microprocesseur, les différentes instructions d'un programme sont mises en oeuvre séquentiellement par des signaux électriques cadencés qui sont fournis par un circuit horloge et le nombre de cycles des signaux horloge pour effectuer une instruction est variable d'un microprocesseur à un autre selon le fabricant et le type de microprocesseur, ce nombre variant de quelques cycles à plusieurs dizaines de cycles.

En conséquence, les fabricants de microprocesseurs ont cherché à diminuer, autant que possible, le nombre de cycles par instruction, ce qui conduit à une diminution de la fréquence des signaux horloge pour une même efficacité et, corrélativement, à une diminution de la consommation électrique qui varie dans le même sens que la fréquence.

Actuellement, les microprocesseurs les plus puissants effectuent une instruction en un demi-cycle mais, pour réaliser une telle performance, ils utilisent des techniques dites de "pipeline" ou de "chevauchement" et de "parallélisme". Ainsi, par exemple, une instruction s'exécute en quatre cycles mais pendant ces mêmes cycles, huit autres instructions vont être exécutées en parallèle.

Une structure de microprocesseur de type "pipeline" est par exemple décrite dans le brevet EP-A-0 569 312 et comprend des registres d'instructions en parallèle qui sont chargés en fonction d'un code contenu dans l'instruction elle-même.

De telles techniques présentent les inconvénients suivants :
- la technique de "pipeline" ou de "chevauchement" est facile à gérer lors du déroulement d'un programme linéaire mais est très difficile à gérer lorsqu'un programme présente de nombreux "sauts conditionnels", ce qui est le cas le plus fréquent. En effet, dans le cas d'un saut conditionnel, les autres instructions chargées dans la structure de "pipeline" ou de "chevauchement" n'auraient pas été exécutées et il faut donc remplir à nouveau la structure de chevauchement, d'où une grande perte d'efficacité ;
- une telle architecture conduit à une plus grande complexité et à un accroissement du volume du matériel utilisé, ce qui ne va pas dans le sens d'un bon compromis entre la surface des circuits intégrés et l'efficacité de l'ensemble ;
- une telle architecture, par suite de la perte d'efficacité due au "chevauchement" et de l'accroissement du volume de matériel, conduit à une plus grande consommation électrique.

Le but de la présente invention est donc de réaliser un système d'organisation des circuits électroniques d'un microprocesseur et un procédé de séquencement des opérations réalisées par ces circuits qui conduisent à une meilleure efficacité du microprocesseur, c'est-à-dire à un petit nombre de cycles d'horloge par instruction, à une faible durée de cycle, c'est-à-dire à une fréquence d'horloge élevée et à une faible consommation électrique.

L'invention est principalement caractérisée par le fait que le chargement de chaque registre d'instruction de chaque étage de la structure de "chevauchement" du microprocesseur est commandé par un signal horloge dont l'application au registre concerné est conditionnée par un signal de décodage de l'instruction contenue dans le registre d'instruction qui le précède dans la chaîne des registres d'instruction.

Par suite de cette architecture, un registre d'instruction de la chaîne n'est activé ou chargé par un signal horloge que si l'instruction contenue dans le registre d'instruction précédent le prévoit. Ainsi, seuls les registres d'instruction qui sont nécessaires à l'exécution d'un programme seront activés ou chargés.

L'invention concerne donc un microprocesseur comportant des registres d'instruction en chaîne, caractérisé en ce que au moins une borne de sortie de chaque registre d'instruction est connectée à un circuit de décodage dont la borne de sortie est connectée à la borne d'entrée du signal horloge du registre d'instruction qui le suit dans la chaîne par l'intermédiaire d'un circuit logique qui reçoit le signal horloge.

L'invention concerne plus précisément un microprocesseur du type comprenant au moins une mémoire de programme qui est adressée par un compteur de programme par l'intermédiaire d'un circuit d'adressage et qui fournit sur ses bornes de sortie un code d'instruction lorsqu'elle est adressée, au moins un registre d'instruction du type à chargement commandé par un signal horloge appliqué à une borne d'entrée horloge dans lequel doit être enregistré le code d'instruction lu dans la mémoire de programme et un circuit horloge qui fournit des signaux horloge de séquencement des opérations effectuées par le microprocesseur, caractérisé en ce qu'à chaque registre d'instruction est associé un dispositif d'inhibition qui a des bornes d'entrée et des première et deuxième bornes de sortie,
- les bornes d'entrée étant connectées aux bornes d'entrée dudit registre associé, à la deuxième borne de sortie du dispositif d'inhibition précédent et à une borne de sortie du circuit horloge,
- ladite première borne de sortie du dispositif d'inhibition étant connectée à la borne d'entrée horloge dudit registre d'instruction associé,
- ledit dispositif d'inhibition étant prévu pour fournir sur ladite première borne de sortie un signal de chargement dudit registre d'instruction associé lorsque le code d'instruction contient une combinaison de chiffres prédéterminée.

L'invention sera mieux comprise à l'aide de la description suivante d'exemples particuliers de réalisation, ladite description étant faite en relation avec les dessins joints dans lesquels :
- la figure 1 est un schéma simplifié d'un premier exemple particulier de réalisation de microprocesseur mettant en oeuvre l'invention et ne comportant que les éléments nécessaires à la compréhension de l'invention ;
- les figures 2.A à 2.N sont des diagrammes de signaux d'état qui permettent de comprendre le fonctionnement du microprocesseur de la figure 1 ;
- la figure 3 est un schéma simplifié d'un deuxième exemple particulier de réalisation d'un microprocesseur mettant en oeuvre l'invention et ne comportant que les éléments nécessaires à la compréhension de l'invention ;
- les figures 4.A à 4.N sont des diagrammes de signaux d'état qui permettent de comprendre le fonctionnement du microprocesseur de la figure 3, et
- la figure 5 est un schéma d'une chaîne de registres d'instruction d'un microprocesseur qui présentent les caractéristiques de l'invention.

Sur les figures, les références identiques désignent les mêmes éléments avec des fonctions identiques.

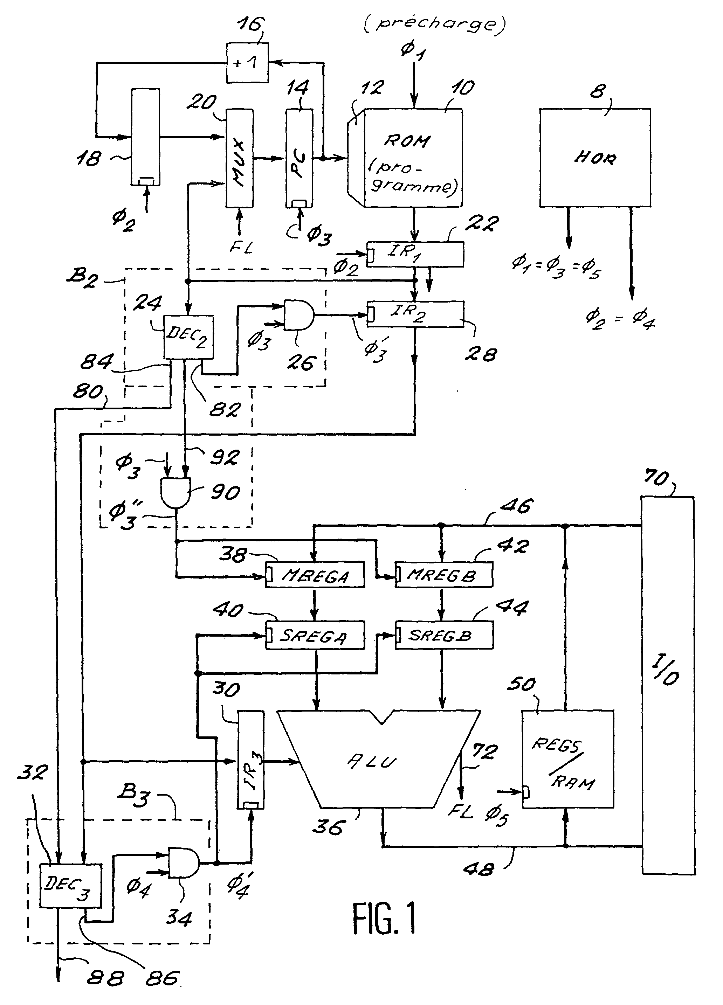

Comme le montre la figure 1, un microprocesseur auquel l'invention s'applique comprend une mémoire de programme 10 (également désignée ROM) dont les cellules de mémoire sont sélectionnées par un circuit d'adressage 12 qui reçoit les adresses fournies par un compteur de programme 14 (également désigné PC). Le compteur de programme 14 passe d'une adresse à la suivante par une opération représentée schématiquement par le rectangle 16 comportant le chiffre algébrique (+1) et le résultat de cette opération est enregistré dans le registre 18 avant d'être transmis au compteur de programme 14 par l'intermédiaire d'un circuit de multiplexage 20 (également désigné MUX). Ce circuit de multiplexage 20 reçoit non seulement des codes du registre 18 mais aussi ceux d'un registre 22 (également désigné IR₁) qui est le registre de sortie de la mémoire de programme 10 pour enregistrer l'instruction lue dans cette mémoire. Les codes d'instruction enregistrés dans le registre 22 sont transférés dans un registre 28 (également désigné IR₂) avant d'être transmis à un registre 30 (également désigné IR₃) qui est le registre de commande d'une unité arithmétique et logique 36 (également désignée ALU).

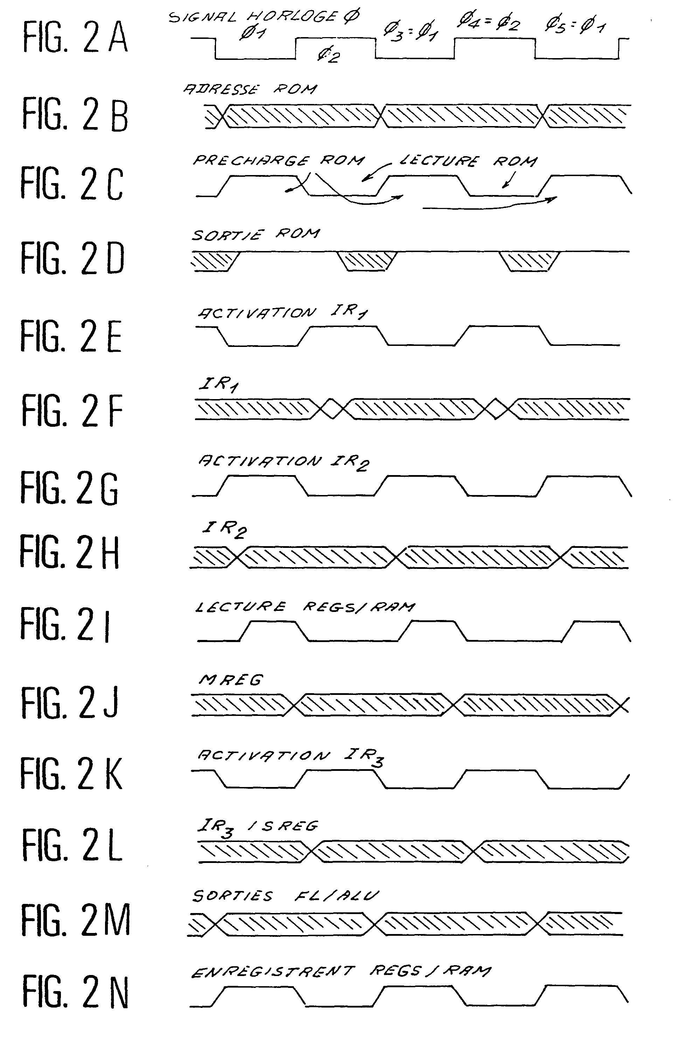

Les différents signaux de séquencement sont fournis par un circuit horloge 8 (également désigné HOR) et ces signaux sont désignés par Φ₁, Φ_{2'} Φ₃, Φ₄ et Φ₅ (figure 2.A).

Selon l'invention, la transmission du registre 22 (IR₁) au registre 28 (IR₂) est conditionnée par le décodage partiel des chiffres du code d'instruction contenu dans le registre 22 (IR₁). A cet effet, le dispositif de l'invention comprend un circuit de décodage 24 (également désigné DEC₂) dont les bornes d'entrée sont connectées aux bornes de sortie du registre 22 (IR₁) qui sont en même temps les bornes d'entrée du registre 28 (IR₂). Une première borne de sortie 82 du circuit 24 est connectée à une des deux bornes d'entrée d'une porte 26 qui réalise l'opération logique ET avec le signal horloge Φ₃ . La borne de sortie du circuit 26 est connectée à la borne d'entrée du signal horloge du registre 28 (IR₂). Dans le cas où le signal résultant du décodage ouvre la porte 26, cette dernière fournit un signal Φ'₃ qui autorise le chargement du registre 28 (IR₂) du code contenu dans le registre 22 (IR₁).

De même, selon l'invention, la transmission du registre 28 (IR₂) au registre 30 (IR₃), c'est-à-dire en fait le chargement de ce dernier, est conditionnée par le décodage partiel des chiffres du code contenu dans le registre 28 (IR₂) à l'aide d'un circuit de décodage 32 (également désigné DEC₃). A cet effet, les bornes de sortie du registre 28 (IR₂) sont non seulement connectées aux bornes d'entrée du registre 30 (IR₃) mais aussi aux bornes d'entrée d'un circuit de décodage 32. Une première borne de sortie 86 du circuit de décodage 32 est connectée à une des deux bornes d'entrée d'une porte 34 qui réalise l'opération logique ET avec le signal horloge Φ₄. La borne de sortie du circuit 34 est connectée à la borne d'entrée du signal horloge du registre 30 (IR₃). Dans le cas où le signal de décodage du circuit 32 ouvre la porte 34, cette dernière fournit un signal Φ'₄ qui autorise le chargement du registre 30 (IR₃).

Le circuit de décodage DEC₂ et la porte 26 constituent un premier dispositif d'inhibition B₂ ; de même, le circuit de décodage DEC₃ et la porte 34 constituent un deuxième dispositif d'inhibition B₃.

L'unité arithmétique et logique 36 (ALU) est associée, de manière connue, à une mémoire 50 (également désignée REGS/RAM) par l'intermédiaire d'une liaison 48 de type BUS et les informations lues dans la mémoire 50 sont transmises à l'unité arithmétique et logique 36 par l'intermédiaire d'une liaison 46 de type BUS et de quatre registres 38, 40, 42 et 44 (également désignés respectivement MREGA, SREGA, MREGB et SREGB).

De manière également connue, les liaisons BUS 46 et 48 sont connectées à des circuits d'entrée/sortie 70 (également désignés I/O).

La mémoire 50 comprend des registres et une mémoire proprement dite du type à accès aléatoire plus connue sous l'acronyme anglo-saxon RAM.

Les registres de chaque couple 38, 40 et 42, 44 sont du type "Maître" (préfixe M) et "esclave" (préfixe S) et leur chargement peut être commandé par les signaux horloge conditionnels Φ'₃ et Φ'₄ qui sont fournis respectivement par les portes 26 et 34. Cependant, sur le schéma de la figure 1, la solution choisie est différente en ce sens que le signal de sortie Φ'₃ de la porte 26 n'est pas utilisé mais que l'on utilise un autre signal Φ''₃ qui est élaboré par une porte 90 dont les deux bornes d'entrée sont connectées l'une à la borne de sortie du circuit horloge fournissant le signal Φ₃ et l'autre à une autre borne de la sortie 92 du circuit de décodage 24 (DEC₂). Un signal sur la borne de sortie 92 correspond à un code prédéterminé de l'instruction indiquant que l'unité arithmétique 36 (ALU) sera utilisée et qu'il faut donc charger les registres 38 et 42. On obtient ainsi sur la borne de sortie de la porte 90 un signal Φ''₃ qui apparaît en même temps que Φ'₃ et qui est appliqué à la borne d'entrée horloge des registres 38 et 42.

Tous les registres de schéma de la figure 1, y compris ceux de la mémoire 50, sont du type à verrouillage actif au signal d'état du signal horloge Φ qui leur est appliqué. Cette manière de fonctionner est représentée par un rectangle dans chaque registre associé à l'identification du signal horloge conditionnel ou non.

L'unité arithmétique logique 36 fournit des signaux dits de branchement FL, également appelés signaux "Drapeau", sur des bornes de sortie 72, ces signaux étant appliqués, notamment, au circuit de multiplexage 20.

Les signaux fournis par les circuits de décodage 24 et 32 peuvent être utilisés dans le microprocesseur à d'autres fins que celles de conditionner le chargement des registres d'instruction 28 et 30. Notamment, il est prévu une liaison électrique 80 entre le circuit de décodage 24 (DEC₂) et le circuit de décodage 32 pour informer ce dernier que le registre 28 (IR₂) a été chargé ou non. A cet effet, les circuits de décodage 24 et 32 ont deux bornes de sortie, l'une 82 ou 86 pour la liaison avec la porte 26 ou 34 et l'autre 84 ou 88 pour la liaison avec le circuit de décodage suivant tel que celui référencé 32 sur la figure 1. Les deux bornes de sortie 82, 84 ou 86, 88 de chaque circuit de décodage 24 ou 32 pourraient être confondues dans le cas où elles correspondraient au décodage d'un même nombre avec la même polarité. Cependant, dans le cas général, les polarités des signaux de décodage peuvent devoir être différents et les codes à décoder peuvent aussi être différents.

Le fonctionnement du microprocesseur, représenté schématiquement par la figure 1, sera maintenant expliqué dans sa relation avec les caractéristiques de l'invention et il sera fait référence aux diagrammes des signaux des figures 2.A à 2.N..

La figure 2.A représente les cycles du signal horloge Φ, chaque cycle se décomposant en deux phases : Φ₁, Φ₂, pour le premier cycle, Φ₃, Φ₄ pour le deuxième cycle, Φ₅, ... pour le troisième cycle et ainsi de suite. Les diagrammes des figures 2.A, 2.C, 2.E, 2.G, 2.I, 2.K et 2.N représentent des signaux d'état tandis que les diagrammes hachurés des figures 2.B, 2.D, 2.F, 2.H, 2.J, 2.L et 2.M représentent les valeurs des codes qui apparaissent sur les bornes de sortie des différents registres, des mémoires et de l'unité arithmétique et logique ALU, tels qu'indiqués sur les diagrammes.

En phase Φ₁ (figure 2.A) est effectuée la précharge de la mémoire ROM (figure 2.C) en vue de sa lecture par le code d'adresse contenu dans le compteur de programme PC (figure 2.B). La mémoire ROM est lue pendant la phase Φ₂ (figure 2.D) et son contenu est enregistré dans le registre d'instruction IR₁ (figure 2.F) par suite de la présence du signal Φ₂ (figure 2.E) qui est appliqué à la borne d'entrée d'horloge du registre IR₁. Dès le chargement du registre IR₁, l'instruction qu'il contient est décodée partiellement dans le circuit de multiplexage MUX de manière à déterminer si l'instruction est un branchement. Si c'est le cas, le circuit de multiplexage MUX choisit entre l'adresse de saut et l'adresse de l'instruction suivante contenue dans le registre 18 au temps Φ₂, en fonction des conditions de branchement données par les signaux FL dits de drapeau fournis par l'unité arithmétique et logique ALU.

En phase Φ₃, un nouveau code d'adresse d'instruction est chargé dans le compteur de programme PC, soit l'adresse de saut, soit l'adresse suivante du programme. Dans le cas d'un branchement, le circuit de décodage DEC₂ ne fournit pas de signal d'ouverture de la porte 26 de sorte que le registre IR₂ ne peut se mettre en position de chargement pour enregistrer le code contenu dans le registre IR₁ (code qui est une instruction de branchement) et reste donc en position de mémorisation du transfert précédent.

Dans le cas où il n'y a pas de branchement, le circuit de décodage DEC₂ fournit un signal d'ouverture de la porte 26 de sorte que le registre IR₂ se charge du contenu du registre IR₁, lors de l'apparition du signal Φ'₃. Dès le chargement dans le registre IR₂ (figure 2.H), un décodage partiel du code d'instruction est réalisé par le circuit DEC₃. Si ce décodage détermine qu'il s'agit d'une opération à effectuer par l'unité arithmétique et logique ALU, le signal de décodage ouvre la porte 34 de sorte que le registre IR₃ se met en position de chargement du contenu du registre IR₂ lors de l'apparition du signal Φ'₄ (figure 2.K).

Le signal Φ'₄ indique une opération de l'unité ALU et sert à charger les registres 40 et 44 (figure 2.L) d'entrée de cette unité avec les contenus des registres 38 et 42 (figure 2.J) qui ont été préalablement chargés par les codes lus en Φ₃ (figure 2.I) dans la mémoire 50 grâce au signal Φ'₃ fourni par le circuit de décodage 24.

Les opérations dans l'unité 36 (ALU) s'effectuent pendant la phase Φ₄ de sorte qu'à la fin de cette phase, cette unité fournit, d'une part, les signaux FL dits de drapeau et, d'autre part, le code de donnée à enregistrer dans la mémoire 50 (figure 2.M) par l'intermédiaire de la liaison BUS 48. L'enregistrement dans la mémoire 50 est réalisé durant la phase Φ₅ (figure 2.N).

La liaison 80 a pour but d'informer le circuit de décodage 32 que le registre d'instruction 28 (IR₂) a été chargé ou non. Si le registre 28 (IR₂) a été chargé, alors le circuit de décodage 32 (DEC₃) doit déterminer si l'instruction en cours doit continuer à être exécutée dans l'étage suivant de la structure de "chevauchement" ou si elle se termine à ce niveau. Si le registre 28 (IR₂) n'a pas été chargé, alors le circuit de décodage 32 (DEC₃) ne doit fournir aucun signal parce que l'instruction s'est déjà terminée. Mais, comme le registre 28 (IR₂) n'a pas été chargé, il a gardé son ancienne valeur, ce qui conduirait à ré-exécuter l'instruction précédente, pour éviter une telle ré-exécution, il est nécessaire d'en avertir le circuit d'inhibition suivant B3 par le signal sur la liaison 80.

La description ci-dessus du fonctionnement du microprocesseur selon l'invention montre qu'une instruction s'effectue en cinq phases. Par ailleurs, une seule opération lente, à savoir la précharge de la mémoire 10, la lecture de la mémoire 10, la lecture de la mémoire 50, l'opération de l'unité 36 (ALU) et l'enregistrement dans la mémoire 50, est réalisée par phase, chaque phase comportant en outre des décodages simples. Il en résulte que la fréquence limite du signal horloge est élevée.

Comme une instruction s'effectue en cinq phases, les différents niveaux de l'architecture à chevauchement permettent d'effectuer une instruction à chaque cycle. En outre, la manière de traiter les branchements dès le premier registre d'instruction IR₁ permet de n'avoir aucune perte d'efficacité. Il y aura donc autant d'instructions exécutées que de cycles.

La consommation d'un tel système est optimale car seuls les éléments utiles à l'exécution de l'instruction fonctionnent, les autres n'étant pas sollicités. De plus, les différents registres IR₂, IR₃, SREGA et SREGB ne sont en chargement que lorsque les valeurs à leurs entrées sont stables, ce qui permet ainsi d'effectuer les différentes opérations uniquement avec des valeurs exemptes d'états instables et ainsi d'éviter de nombreuses transitions inutiles, c'est-à-dire de faire l'opération plusieurs fois comme dans la plupart des microprocesseurs.

Il est à remarquer que cette nouvelle architecture et le séquencement qui est mis en oeuvre conduisent à un synchronisme parfait entre l'arrivée d'une nouvelle instruction sur l'unité 36 (ALU) et des nouvelles données sur lesquelles s'effectuera l'instruction.

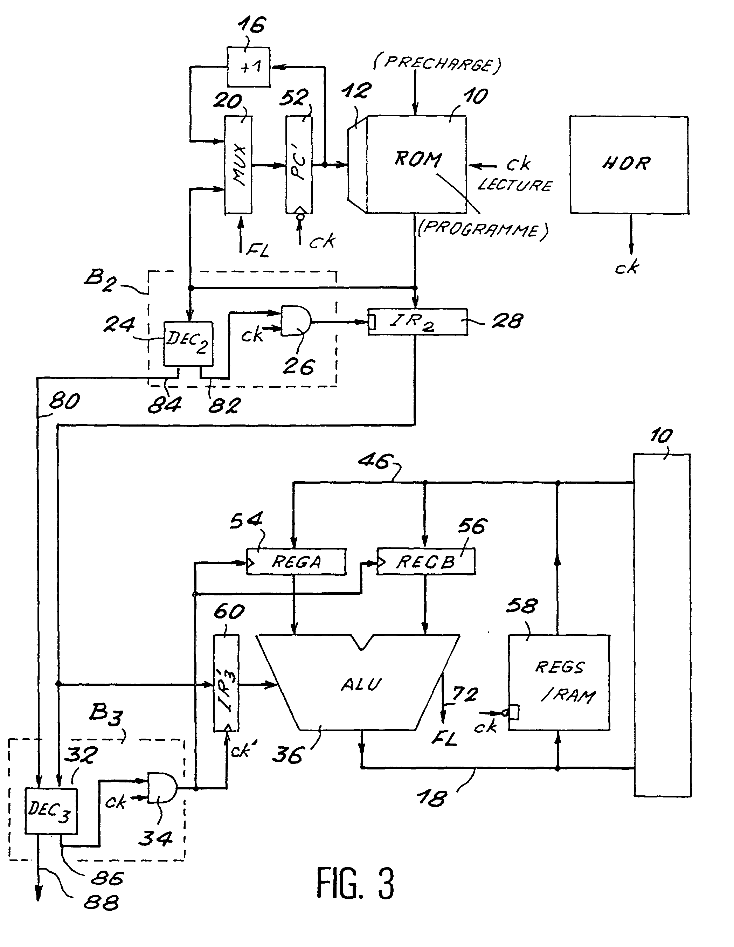

Le microprocesseur de la figure 3 diffère de celui de la figure 1 par les aspects suivants :
- l'absence du registre 22 (IR₁) de sortie de la mémoire 10, ce qui conduit à charger le registre 28 (IR₂) pendant la lecture de la mémoire 10,
- le remplacement de chaque couple de registres 38, 40 et 42, 44 par un registre unique du type bascule actif sur le front du signal horloge ck,
- le remplacement du registre 30 (IR₃) à verrouillage actif à l'état par un registre 60 (IR'₃) du type bascule actif sur le front du signal horloge ck,
- l'absence du registre 18 et son remplacement par un compteur de programme 52 (PC') du type bascule actif sur le flanc descendant du signal horloge ck.

Pour ne pas devoir utiliser le registre 22 (IR₁), on utilise le fait que la mémoire 10 (ROM) est à précharge de sorte que, au début de la lecture, toutes les sorties sont à l'état "1". On s'arrange alors pour que tous les codes opératoires des branchements soient judicieux afin qu'une simple détection de certains "0" implique automatiquement que l'instruction doit être chargée dans le registre 28 (IR₂).

Ainsi, en supprimant le registre 22 (IR₁), la consommation d'énergie est diminuée car ce registre est le seul qui est chargé sans condition, donc à chaque lecture. Par ailleurs, le décodage par le circuit 32 (DEC₃), de loin le plus long, peut commencer dès la lecture de l'instruction, d'où un gain en fréquence limite.

Pour encore augmenter ce gain en fréquence limite, il est aussi possible de prolonger les opérations de l'unité 36 (ALU) pendant une partie de la phase Φ₅ lorsque ces opérations sont lentes, par exemple dans le cas d'une multiplication parallèle/parallèle.

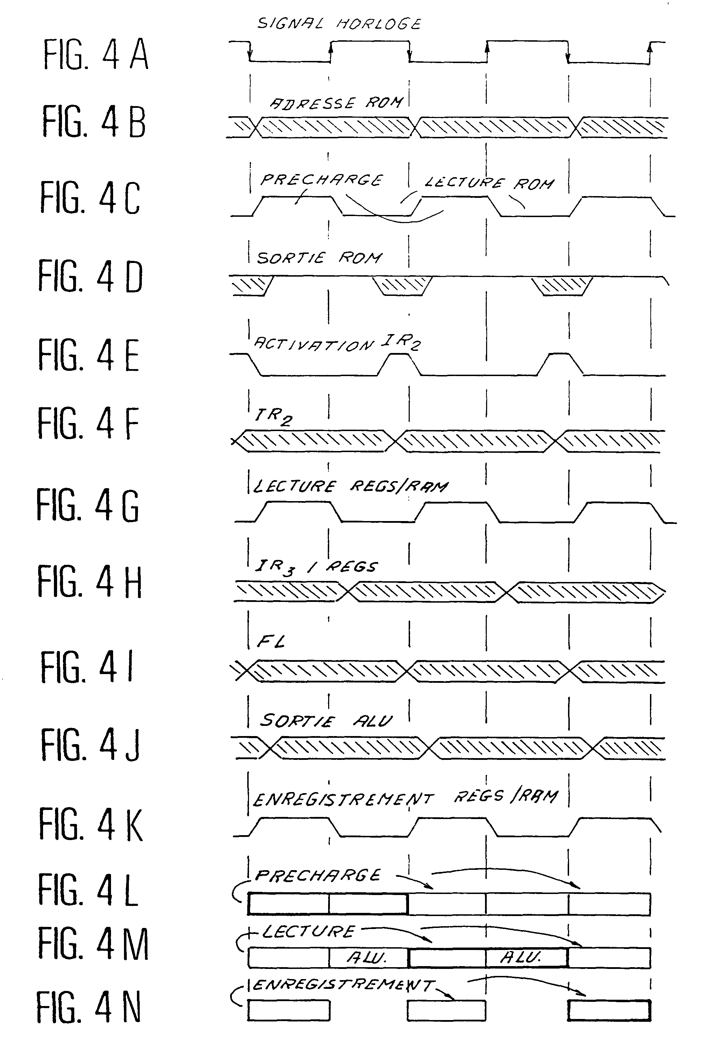

Le microprocesseur selon le schéma de la figure 3 fonctionne de manière similaire à celui du schéma de la figure 1 et les diagrammes des signaux sont ceux des figures 4.A à 4.K, les figures 4.L, 4.M et 4.N indiquant les opérations qui peuvent être effectuées au cours des cycles successifs au niveau de la mémoire 10 (figure A.L), de l'unité 36 (figure 4.M) et de la mémoire 50 (figure 4.N), les rectangles en trait gras indiquant le cheminement de l'information d'une phase à la suivante pour une instruction lue dans la mémoire 10.

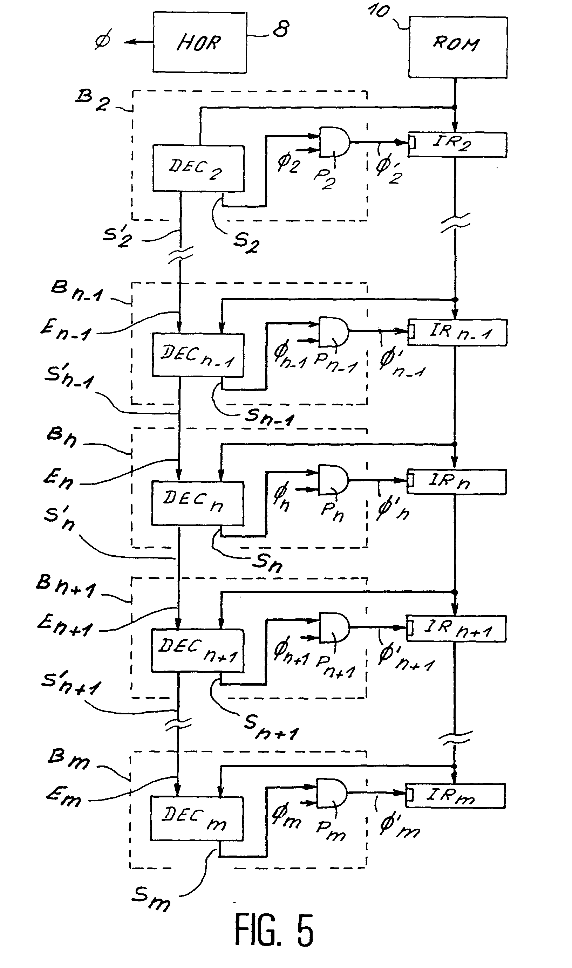

Les deux exemples de réalisation qui ont été décrits en relation avec les figures 1 à 4 mettent en oeuvre l'invention pour deux registres d'instruction IR₂ et IR₃ mais il est clair que l'invention s'applique à un nombre indéterminé de registres d'instruction comme le montre le schéma de la figure 5.

Dans ce schéma, les (m-1) registres d'instruction d'une chaîne sont connectés en série et seuls les registres IR₂ , IRₙ₋₁, IRₙ, IRₙ₊₁ et IRₘ ont été représentés, les registres IR₃, ... IRₙ₋₂, IRₙ₊₂, ..., intermédiaires n'ayant pas été représentés.

A chaque registre d'instruction est associé un dispositif d'inhibition B₂, ..., Bₙ₋₁, Bₙ, Bₙ₊₁, ...Bₘ pour activer le chargement du registre concerné de manière conditionnelle. A cet effet, chaque dispositif d'inhibition comprend un circuit de décodage DEC₂, DECₙ₋₁, DECₙ, DECₙ₊₁, ..., DECₘ dont les bornes d'entrée sont connectées aux bornes de sortie du registre d'instruction qui le précède dans la chaîne ou la mémoire 10 pour le premier registre d'instruction IR₂₅ₘ de la chaîne. Bien entendu, les bornes de sortie d'un registre sont connectées aux bornes d'entrée du registre suivant dans la chaîne et il revient au même de dire que les bornes d'entrée d'un circuit de décodage sont connectées aux bornes d'entrée du registre d'instruction qui lui est associé.

Une première borne de sortie S₂... Sₙ₋₁, Sₙ, Sₙ₊₁, ...Sₘ de chaque circuit de décodage DEC est connectée à une première borne d'une porte P (P₂, ..., Pₙ₋₁, Pₙ, Pₙ₊₁, ...Pₘ) dont l'autre borne d'entrée est connectée au circuit horloge 8 (HOR) pour recevoir le signal de phase Φ₂, ..., Φₙ₋₁, Φₙ, Φₙ₊₁, ..., Φₘ qui le concerne. La borne de sortie de la porte P est connectée à la borne d'entrée du signal d'horloge du registre d'instruction auquel est associée la boucle. Dans le cas où le code d'instruction contenu dans le registre précédent correspond à celui du circuit de décodage DEC, la porte P fournit un signal Φ'₁, ..., Φ'ₙ₋₁, Φ'ₙ, Φ'ₙ₊₁, ..., Φ'ₘ de chargement du registre auquel le signal est appliqué.

Chaque circuit de décodage DEC₂, ...DECₙ₋₁, DECₙ, DECₙ₊₁, ...DECₘ présente une deuxième borne de sortie S'₂, ...S'ₙ₋₁, S'ₙ' S'ₙ₊₁ qui est connectée à une entrée supplémentaire Eₙ₋₁, Eₙ, Eₙ₊₁, ...Eₘ du circuit de décodage suivant dans la chaîne des registres. Cette liaison, comme on l'a expliqué ci-dessus en relation avec les figures 1 et 3, ayant pour but d'avertir chaque boucle d'inhibition de l'état de la boucle d'inhibition précédente.

Bien entendu, comme décrit en relation avec le schéma de la figure 1, chaque circuit de décodage peut présenter d'autres bornes de sortie qui correspondent chacune à un décodage différent de tout ou partie des chiffres du code d'instruction et les signaux qui apparaissent sur ces autres bornes de sortie peuvent être utilisés à divers usages tel que celui décrit en relation avec la figure 1.

Le microprocesseur selon l'invention présente les avantages suivants :
- une grande efficacité car une instruction est effectuée par cycle d'horloge ;
- une architecture en général plus simple que celles de l'art antérieur, d'où un gain en surface et une diminution de la consommation électrique ;
- une fréquence maximale élevée eu égard à la simplicité de l'architecture et au fait qu'une instruction est effectuée en cinq phases ;
- une très basse consommation car il y a moins de cycles par instruction et donc moins de transitions inutiles ;
- pour une efficacité donnée, il est possible d'avoir une fréquence horloge plus faible, d'où une consommation électrique plus faible et possibilité de baisser la tension ;
- seuls les registres d'instruction concernés par l'instruction et les circuits associés pour effectuer l'instruction sont activés ;
- il n'est pas nécessaire d'effectuer un traitement du signal horloge contrairement aux méthodes classiques à phases recouvrantes .

## Revendications

1. Microprocesseur du type comprenant au moins une mémoire de programme (10, ROM) qui est adressée par un compteur de programme (14/PC) par l'intermédiaire d'un circuit d'adressage (12) et qui fournit sur ses bornes de sortie un code d'instruction lorsqu'elle est adressée, au moins un registre d'instruction (28/IR₂) du type à chargement commandé par un signal horloge (Φ,ck) appliqué à une borne d'entrée horloge, chargement subordonné à la valeur d'un code, dans lequel doit être enregistré le code d'instruction lu dans la mémoire de programme (10/ROM) et un circuit horloge (8/HOR) qui fournit des signaux horloge de séquencement des opérations effectuées par le microprocesseur, **caractérisé en ce que** ledit microprocesseur comporte au moins deux registres d'instruction utilisés en séquence, et qu'à chaque registre d'instruction à partir du deuxième est associé un dispositif d'inhibition (B₂, B₃, ..Bₙ₋₁, Bₙ, Bₙ₊₁, ...Bₘ qui a des bornes d'entrée et au moins des première et deuxième bornes de sortie,
- les bornes d'entrée étant connectées aux bornes d'entrée dudit registre associé, à la deuxième borne de sortie (S'₂, ...S'ₙ₋₁, S'ₙ, S'ₙ₊₁, ...Sₘ) du dispositif d'inhibition précédent et à une borne de sortie du circuit horloge (8/HOR),
- ladite première borne de sortie du dispositif d'inhibition étant connectée à la borne d'entrée horloge dudit registre d'instruction associé,
- ledit dispositif d'inhibition étant prévu pour fournir sur ladite première borne de sortie un signal (Φ') de chargement dudit registre d'instruction associé lorsque le code d'instruction lu dans le registre précédent contient une combinaison de chiffres appartenant à un ensemble de combinaisons prédéterminé.

2. Microprocesseur selon la revendication 1, **caractérisé en ce que** chaque dispositif d'inhibition (B₂, ...Bₙ₋₁, Bₙ, Bₙ₊₁, ...Bₘ) comprend un circuit de décodage (DEC₂, ...DECₙ₋₁, DECₙ, DECₙ₊₁, ...DECₘ) et une porte électronique (P₂, ...Pₙ₋₁, Pₙ, Pₙ₊₁, ...Pₘ), chaque circuit de décodage comportant des bornes d'entrée et au moins des première et deuxième bornes de sortie,
- lesdites bornes d'entrée étant connectées, d'une part, aux bornes d'entrée du registre d'instruction associé et, d'autre part, à la deuxième borne de sortie (S'₂, ...Sₙ₋₁, S'ₙ, S'ₙ₊₁, ...) du circuit de décodage (DEC₂, ...DECₙ₋₁, DECₙ, DECₙ₊₁, ...) du dispositif d'inhibition précédent,
- ladite première borne de sortie (S₂, ...Sₙ₋₁, Sₙ, Sₙ₊₁, ...Sₘ) du circuit de décodage étant connectée à une des deux bornes d'entrée de la porte (P₂, ...Pₙ₋₁, Pₙ, Pₙ₊₁, Pₙ, Pₙ₊₁, ...Pₘ), l'autre borne d'entrée de ladite porte étant connectée audit circuit horloge,
- la porte (P₂, ...Pₙ₋₁, Pₙ, Pₙ₊₁, Pₙ, Pₙ₊₁, ...Pₘ) comportant une borne de sortie correspondant à ladite première borne de sortie du dispositif d'inhibition.

3. Microprocesseur selon la revendication 1 ou 2 du type comprenant, en outre, une unité arithmétique et logique (36/ALU) associée à une mémoire de données (50/REGS/RAM), des registres d'entrée (54 et 56) des données dans ladite unité (36/ALU) et un registre d'instruction (60) contenant le code de l'opération à effectuer sur les données dans ladite unité, **caractérisé en ce que** le signal (ck') fourni par le dispositif d'inhibition (B₃) associé audit registre d'instruction (60, IR'₃) est appliqué à la borne d'entrée horloge des registres d'entrée (54, 56).

4. Microprocesseur selon la revendication 3 du type dans lequel les registres d'entrée des données dans ladite unité (36/ALU) comprennent chacun un couple de registres (38, 40 et 42, 44), **caractérisé en ce que**, d'une part, le signal (Φ'₄) fourni par le dispositif d'inhibition (B₃) associé audit registre d'instruction (30, IR₃) est appliqué à la borne d'entrée du signal horloge des registres d'entrée (40, 44) qui sont connectés directement à ladite unité (36/ALU) et, d'autre part, un signal (Φ''₃) fourni par un dispositif d'inhibition (B₂) associé au registre d'instruction (28/IR₂) de sortie de la mémoire de programme (10/ROM) est appliqué à la borne d'entrée du signal horloge des registres d'entrée (38, 42) connectées directement à la mémoire de données (50).

5. Microprocesseur selon l'une quelconque des revendications précédentes 2 à 4, **caractérisé en ce que** chaque circuit de décodage (DEC₂, ...DECₙ₋₁, DECₙ, DECₙ₊₁) comprend au moins deux bornes de sortie, chaque borne de sortie fournissant un signal de décodage lorsque le code d'instruction contenu dans le registre associé présente une combinaison de chiffres prédéterminée et chaque signal de décodage étant utilisé pour commander une opération dans le microprocesseur.

## Patentansprüche

1. Mikroprozessor mit wenigstens einem Programmspeicher (10, ROM), der von einem Programmzähler (14/PC) über einen Adressierschaltkreis (12) adressiert wird und der an seinen Ausgangsanschlüssen einen Befehlscode liefert, wenn er adressiert wird, wenigstens einem Befehlsregister (28/IR₂), das durch ein Taktsignal (Φ, ck) gesteuert geladen wird, wobei das Taktsignal an einen Takteingangsanschluß angelegt wird, wobei das Laden dem Wert eines Codes untergeordnet ist, in dem der Befehlscode, der aus dem Programmspeicher (10/ROM) gelesen wird, aufgezeichnet werden muß, und einem Taktschaltkreis (8/HOR), der Taktsignale für die Abfolgesteuerung der Operationen, welche von dem Mikroprozessor ausgerührt werden, liefert, **dadurch gekennzeichnet, daß** der Mikroprozessor wenigstens zwei Befehlsregister aufweist, die in Folge verwendet werden, und daß jedes Befehlsregister ab dem zweiten einer Sperreinrichtung (B₂, B₃, ...Bₙ₋₁, Bₙ, Bₙ₊₁, ...Bₘ) zugeordnet ist, welche Eingangsanschlüsse und wenigstens einen ersten und einen zweiten Ausgangsanschluß aufweist, wobei
die Eingangsanschlüsse mit den Eingangsanschlüssen des zugehörigen Registers, mit dem zweiten Ausgangsanschluß (S'₂, ...S'ₙ₋₁, S'ₙ, S'ₙ₊₁, ...Sₘ) der vorhergehenden Sperreinrichtung und mit einem Ausgangsanschluß des Taktschaltkreises (8/HOR) verbunden sind,
der erste Ausgangsanschluß der Sperreinrichtung mit dem Takteingangsanschluß des zugehörigen Befehlsregisters verbunden ist,
die Sperreinrichtung vorgesehen ist, um an dem ersten Ausgangsanschluß ein Signal (Φ') zum Laden des zugehörigen Befehlsregisters zu liefern, wenn der in dem vorangehenden Register gelesene Befehlscode eine Ziffernkombination enthält, die in einer vorgegebenen Gesamtheit von Kombinationen auftritt.

2. Mikroprozessor nach Anspruch 1, **dadurch gekennzeichnet, daß** jede Sperreinrichtung (B₂, ..Bₙ₋₁, Bₙ, Bₙ₊₁, ..Bₘ) einen Dekodierschaltkreis (DEC₂, ...DECₙ₋₁, DECₙ₊₁, ...DECₘ) und ein elektronisches Gatter (P₂, ...Pₙ₋₁, Pₙ, Pₙ₊₁, ...Pₘ) aufweist, wobei jeder Dekodierschaltkreis Eingangsanschlüsse und wenigstens einen ersten und einen zweiten Ausgangsanschluße aufweist,
die Eingangsanschlüsse einerseits mit den Eingangsanschlüssen des zugehörigen Befehlsregisters und andererseits mit dem zweiten Ausgangsanschluß (S'₂, ...Sₙ₋₁, S'ₙ, S'ₙ₊₁, ...) des Dekodierschaltkreises (DEC₂, ...DECₙ₋₁, DECₙ, DECₙ₊₁, ...) der vorangehenden Sperreinrichtung verbunden sind,
der erste Ausgangsanschluß (S₂, ...Sₙ₋₁, Sₙ, Sₙ₊₁, ...Sₘ) des Dekodierschaltkreises mit einem der zwei Eingangsanschlüsse des Gatters (P₂, ...Pₙ₋₁, Pₙ, Pₙ₊₁, Pₙ, Pₙ₊₁, ...Pₘ) und der andere Eingangsanschluß des Gatters mit dem Taktschaltkreis verbunden ist,
das Gatter (P₂, ...Pₙ₋₁, Pₙ, Pₙ₊₁, Pₙ, Pₙ₊₁, ...Pₘ) einen Ausgangsanschluß aufweist, der dem ersten Ausgangsanschluß der Sperreinrichtung entspricht.

3. Mikroprozessor nach Anspruch 1 oder 2, mit einer Arithmetik-Logik-Einheit (36/ALU), die einem Datenspeicher (50/REGS/RAM) zugeordnet ist, Eingangsregistern (54 und 56) für Daten in der Einheit (36/ALU) und einem Befehlsregister (60), das den Operationscode enthält, der mit den Daten in der Einheit auszuführen ist, **dadurch gekennzeichnet, daß** das Signal (ck'), welches von der Sperreinrichtung (B₃) geliefert wird, welche dem Befehlsregister (60, IR'₃) zugeordnet ist, an den Takteingangsanschluß der Eingangsregister (54, 56) angelegt wird.

4. Mikroprozessor nach Anspruch 3, bei dem die Dateneingangsregister in der Einheit (36/ALU) jeweils ein Registerpaar (38, 40 und 42, 44) umfassen, **dadurch gekennzeichnet, daß** das Signal (Φ'₄), welches von der Sperreinrichtung (B₃) geliefert wird, die dem Befehlsregister (30, IR₃) zugeordnet ist, einerseits an den Taktsignal-Eingangsanschluß der Eingangsregister (40, 44) angelegt wird, die mit der Einheit (36/ALU) direkt verbunden sind, und daß ein Signal (Φ"₃), welches von einer Sperreinrichtung (B₂) geliefert wird, die dem Befehlsregister (28/IR₂) am Ausgang des Programmspeichers (10/ROM) zugeordnet ist, andererseits an den Taktsignal-Eingangsanschluß der Eingangsregister (38, 42), welche direkt mit dem Datenspeicher (50) verbunden sind, angelegt wird.

5. Mikroprozessor nach einem der vorangehenden Ansprüche 2 bis 4, **dadurch gekennzeichnet, daß** jeder Dekodierschaltkreis (DEC₂, ...DECₙ₋₁, DECₙ, DECₙ₊₁) wenigstens zwei Ausgangsanschlüsse aufweist, wobei jeder Ausgangsanschluß ein Decodiersignal liefert, wenn der Befehlscode, der in dem zugehörigen Register enthalten ist, eine vorgegebene Ziffernkombination aufweist, und jedes Decodiersignal zum Steuern einer Operation in dem Mikroprozessor verwendet wird.

## Claims

1. Micro-processor of the type comprising at least one program memory (10, ROM) which is addressed by a program counter (14/PC) by means of an addressing circuit (12) and which provides an instruction code at its output terminals when it is addressed, at least one instruction register (28/IR₂) of the type with loading controlled by a clock signal (Φ,ck) applied to a clock input terminal, loading dependent on the value of a code, in which the instruction code read from the program memory (10/ROM) must be stored and a clock circuit (8/HOR) which provides clock signals for sequencing the operations performed by the micro-processor, **characterised by** the fact that the said micro-processor includes at least two instruction registers used in sequence, and that with each instruction register starting with the second is associated an inhibition device (B₂, B₃, ..Bₙ₋₁, Bₙ, Bₙ₊₁, ...Bₘ) which has input terminals and at least first and second output terminals,
- the input terminals being connected to the input terminals of the said associated register, to the second output terminal (S'₂, ...S'ₙ₋₁, S'ₙ, S'ₙ₊₁, ...Sₘ) of the preceding inhibition device and to an output terminal of the clock circuit (8/HOR),
- the said first output terminal of the inhibition device being connected to the clock input terminal of the said associated instruction register,
- the said inhibition device being provided to provide at the said first output terminal a signal (Φ') for loading the said associated instruction register when the instruction code read from the preceding register contains a bit combination from a predetermined set of combinations.

2. Micro-processor as described in claim 1, **characterised by** the fact that each inhibition device (B₂, ...Bₙ₋₁, Bₙ, Bₙ₊₁, ...Bₘ) comprises a decoding circuit (DEC₂, ...DECₙ₋₁, DECₙ, DECₙ₊₁, ...DECₘ) and an electronic gate (P₂, ...Pₙ₋₁, Pₙ, Pₙ₊₁, ...Pₘ) each decoding circuit including input terminals and at least first and second output terminals,
- the said input terminals being connected, on the one hand, to the input terminals of the associated instruction register and, on the other, to the second output terminal (S'₂, ...Sₙ₋₁, S'ₙ, S'ₙ₊₁, ...) of the decoding circuit (DEC₂, ...DECₙ₋₁, DECₙ, DECₙ₊₁, ...) of the preceding inhibition device,
- the said first output terminal (S₂, ...Sₙ₋₁, Sₙ, Sₙ₊₁, ...Sₘ) of the decoding circuit being connected to one of the two input terminals of the gate (P₂, ...Pₙ₋₁, Pₙ, Pₙ₊₁, Pₙ, Pₙ₊₁, ...Pₘ), the other input terminal of the said gate being connected to the said clock circuit,
- the gate (P₂, ...Pₙ₋₁, Pₙ, Pₙ₊₁, Pₙ, Pₙ₊₁, ...Pₘ) including an output terminal corresponding to the said first output terminal of the inhibition device).

3. Micro-processor as described in claim 1 or 2, of the type comprising, in addition, an arithmetic logic unit (36/ALU) associated with a data memory (50/REGS/RAM), registers (54 and 56) for inputting data into the said unit (36/ALU) and an instruction register (60) containing the code of the operation to be performed on the data in the said unit, **characterised by** the fact that the signal (ck') provided by the inhibition device (B₃) associated with the said instruction register (60, IR'₃) is applied to the clock input terminal of the input registers (54, 56).

4. Micro-processor as described in claim 3, of the type in which the registers for inputting data into the said unit (36/ALU) each comprise a pair of registers (38, 40 and 42, 44), **characterised by** the fact that, on the one hand, the signal (Φ'₄) provided by the inhibition device (B₃) associated with the said instruction register (30, IR₃) is applied to the clock signal input terminal of the input registers (40, 44) which are connected directly to the said unit (36/ALU) and, on the other, a signal (Φ''₃) provided by an inhibition device (B₂) associated with the output instruction register (28/IR₂) of the program memory (10/ROM) is applied to the clock signal input terminal of the input registers (38, 42) connected directly to the data memory (50).

5. Micro-processor as described in any one of the preceding claims 2 to 4, **characterised by** the fact that each decoding circuit (DEC₂, ...DECₙ₋₁, DECₙ, DECₙ₊₁) includes at least two output terminals, each output terminal providing a decoding signal when the instruction code contained in the associated register has a predetermined bit combination and each decoding signal being used to instruct an operation in the micro-processor.
